# EUROPEAN PATENT SPECIFICATION

(11) **EP 1 304 472 B1**
(45) Date of publication and mention of the grant of the patent: **09.08.2006**
(21) Application number: 01500252.0
(22) Date of filing: 19.10.2001
(51) Int. Cl.: F02K 1/00, F02K 1/12, F02K 1/56, F02K 1/62

(54) **Gas turbine engine two dimensional exhaust nozzle mechanism with reverse exhaust capability**
Verstellbare, zweidimensionale Schubdüse mit Strahlumkehrmöglichkeit
Tuyère de poussée vectoriable, bidimensionelle avec possibilité d'inversion de poussée

(43) Date of publication of application: 23.04.2003
(73) Proprietor: Industria de Turbo Propulsores S.A., 48170 Zamudio (Vizcaya) (ES)
(72) Inventor: Elorriaga Vicario, Javier, 48990 Getxo, Vizcaya (ES); Gutierrez Ozamiz, Asier, 48006 Bilbao (ES)
(74) Representative: Davila Baz, Angel

(56) References cited:
- US-A- 4 052 007
- US-A- 4 392 615
- US-A- 4 753 392
- US-A- 5 833 139

## Description

### BACKGROUND OF THE INVENTION

The present invention relates to a mechanism intended to form part of a two-dimensional exhaust nozzle of the adjustable cross section type, for a gas turbine engine.

Adjustable turbojet engine nozzles are well known in the art; they can be either of a two-dimensional adjustable type, or of a type formed by an annular ring of adjustable convergent flaps. Typical examples of such adjustable convergent flaps can be found in U.S. Pat. Nos. 4,641,783 and 4,817,871. The objective in each of these nozzles is to obtain the optimum jet thrust, while also assuring adequate performance in the area of specific fuel consumption. These objectives are achieved by adjusting the cross section of the nozzle to obtain optimum thrust and specific fuel consumption for each specific operational condition of the jet engine.

For certain applications, the two-dimensional adjustable nozzle type has proven to be advantageous over the annular ring of adjustable convergent flaps, due to its less complicated and simpler structure that reduces the production and maintenance costs of jet engines incorporating these types of nozzles. The two dimensional adjustable nozzles typically comprise a pair of opposite, fixed walls defining the lateral boundaries of the nozzle and a pair of opposite, adjustable convergent flaps defining the upper and lower boundaries of the nozzle. The cross section of the nozzle is adjusted by varying the angle of the adjustable convergent flaps. A typical example of this nozzle type can be found in U.S. Pat. No. 4,778,109.

Often two dimensional nozzles also include thrust reversing capabilities, by varying the angle of the adjustable convergent flaps until the axial flow of gases through the nozzle is blocked, and variable nozzle exit area with thrust vectoring capabilities, by varying the angle of the adjustable divergent flaps. Examples of such nozzles are shown in U.S. Pat. Nos. 4,052,007, 4,375,276 and 4,753,392. The most important objectives of these nozzles are to reduce the nozzle weight and maintain efficiency. The pressure exerted on the convergent flaps result in loads that are proportional to the convergent flap size, so larger convergent flaps require structural reinforcement resulting in heavier structures. The reverse exhaust outlet area must be at least as large as the minimum forward thrust exhaust area to maintain constant engine airflow during reverse thrust operation, but it is desirable to have larger areas to optimise efficiency during reverse thrust. However, achieving large reverse exhaust outlet areas generally requires larger exhaust nozzle convergent flaps that result in an increase of weight.

U.S. Pat. No. 4,690,329 discloses an exhaust nozzle coupled with a reverse exhaust door; the size of the reverse exhaust outlet area is not directly determined by the convergent flaps, but by special doors that are actuated by the movement of the respective convergent flaps, so that each door is displaced to an open position when the corresponding convergent flap is displaced to its reverse thrust position. The arrangement with the doors as per U.S. Pat. No. 4,690,329 involves a large number of movable, interrelated parts, which implies the corresponding disadvantages.

Part of this problem appears to have been solved in U.S. Pat. No. 4,753,392 referred to above.

However, U.S. Pat. No. 4,753,392 discloses arrangements in which each convergent flap is arranged to pivot around one single axis, both during forward thrust operation and during reverse thrust operation. This imposes severe limitations on the degree of freedom of design. That is, when a specific mechanism has to be prepared for a practical case, with a specific set of parameters regarding, for example, forward and reverse thrust area, etc., the structure suggested in U.S. Pat. No. 4,753,392 imposes severe restrictions on the designer, who will have to make some elements, including the convergent flaps, larger and more robust than what might be desirable, thus giving rise to unnecessary heavy mechanisms.

### SUMMARY OF THE INVENTION

The invention is a mechanism as defined in claim 1. Preferred embodiments of the invention are defined in the dependent claims.

The above-mentioned problems are overcome by means of the present invention, which establishes a general structure that provides for a large degree of freedom of design of the different parts in a specific case, so that the designer of a specific mechanism will be able to use light-weight and not unnecessarily bulky and heavy convergent flaps. That is, for specific parameters of forward and reverse thrust areas, the designer will be able to use rather light-weight convergent flaps, without having to sacrifice the strength and resistance of said flaps. Design flexibility is not considered an advantage on its own. The advantage of the final product is that the arrangement meets the forward and exhaust area requirements with short flaps and without the need of additional parts, thus with a lightweight construction.

According to the present invention, opposed convergent flaps mounted through front and rear sliding guides to nozzle sidewalls can be actuated to vary nozzle forward and reverse flow by a single control device. Depending on the position of the flap, it can pivot around the front or rear sliding guides when displaced between a forward thrust operation mode position and a reverse thrust operation mode position. With this arrangement, a flap with a relatively small size can be used without a need for additional devices to block the pass of air to the reverse flow ducts, thus reducing the weight of the mechanism.

Thrust reverse can be achieved by a set of louvers located at the end of the reverse ducts that are preferably actuated by the displacement of the front sliding guide on the sidewalls. Divergent actuators are preferably joined to divergent flaps through a system of rods supported on the nozzle structure; these actuators provide for exit area and thrust vectoring control.

The foregoing and other objects, features and advantages of the present invention will become more apparent in the light of the following detailed description of the preferred embodiments thereof as shown on the accompanying drawings

### BRIEF DESCRIPTION OF THE DRAWINGS

FIG. 1 is a perspective schematic view of a two dimensional nozzle incorporating a first preferred embodiment of the present invention, in which one sidewall has been removed.
FIG. 2 is a cross sectional schematic view showing the exhaust nozzle of the preferred embodiment of the present invention in a maximum forward thrust throat area position.
FIG. 3 is a cross sectional schematic view of the same nozzle in a minimum forward thrust throat area position.
FIG. 4 is a cross sectional view of the same nozzle at full reversing position.
FIG. 5 is a partial schematic view of the nozzle showing the convergent flap mounted on the two sliding guides.
FIG. 6 is a cross sectional schematic view of the same nozzle at vectoring mode.
FIG. 7 is a cross sectional schematic view of the same nozzle with minimum throat area and maximum exit area.
FIG. 8 is a partial schematic view of the nozzle with a mechanism in accordance with a second preferred embodiment of the present invention. This embodiment includes a balanced beam system on the front side of the convergent flap.
FIG. 9 is a partial schematic view of the nozzle in accordance with the first preferred embodiment at forward thrust position, showing the mechanism that provides the movement of the louvers.
FIG. 10 is a partial schematic view of the same nozzle at reverse thrust position, showing the mechanism that provides the movement of the louvers.
FIG. 11 is a partial schematic view of the same nozzle showing an alternative mechanism to open the louvers during thrust reverse mode.

### DESCRIPTION OF PREFERRED EMBODIMENTS

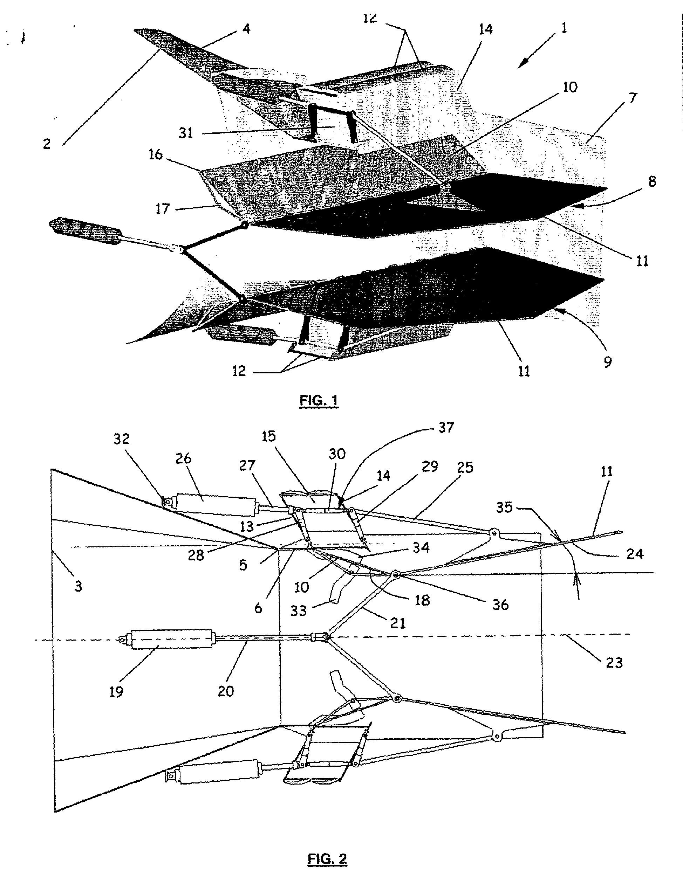

Some preferred embodiments of the present invention will now be described in conjunction with the drawings, beginning with FIG. 1, which shows a two-dimensional exhaust nozzle (1) mounted at the downstream end of a gas turbine engine (not shown). The exhaust system includes a transition gas path duct (2) which transitions from an upstream end (3) having a circular cross section, through an intermediate transition section (4) to a downstream end (5) having a rectangular cross section; said transition gas path duct is positioned upstream from a rectangular convergent nozzle section (6). The gas path includes a pair of spaced apart sidewalls (7) (only one of which is illustrated in the figures), which fit into the rectangular convergent nozzle section (6). The upstream end (3) of the transition gas path duct (2), mates with a circular duct (not shown) corresponding to the outlet of the gas flow path of the gas turbine engine to which the exhaust nozzle (1) is attached.

The exhaust nozzle (1) includes upper and lower flap assemblies (8, 9), each comprising a convergent flap (10) and a divergent flap (11). Both of said convergent flaps (10) and divergent flaps (11) extend from one sidewall (7) to the other (not shown in the drawings). Each convergent flap (10) is mounted on two front sliding guides (16) located at the front end of the convergent flap (10), and on two rear sliding guides (17) located away from said front end of the convergent flap (10), at an intermediate axial position and at a distance from the inner surface (18) of the convergent flap (10), said inner surface being arranged to be a contact surface for gas flowing through the nozzle mechanism. Each side wall (7) contains a first (34) and a second (33) cam track arranged to guide the front (16) and rear (17) sliding guides, respectively.

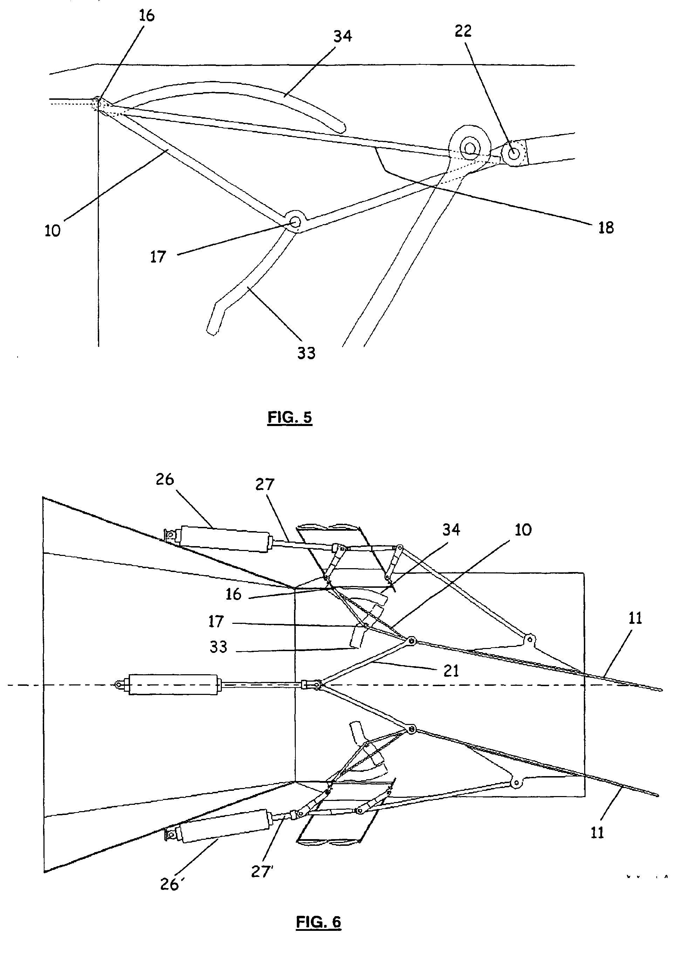

FIG. 5 shows the convergent flap (10) mounted on the front (16) and rear (17) sliding guides that provide for the movability of the convergent flap (10). During forward thrust operation mode, the convergent flaps (10) pivot around the temporarily fixed front sliding guides (16), while the rear sliding guides (17) slide along a portion of the rear cam tracks (33) having a curved shape corresponding to a segment of a circle having its centre at the position of the temporarily fixed front sliding guide (16).

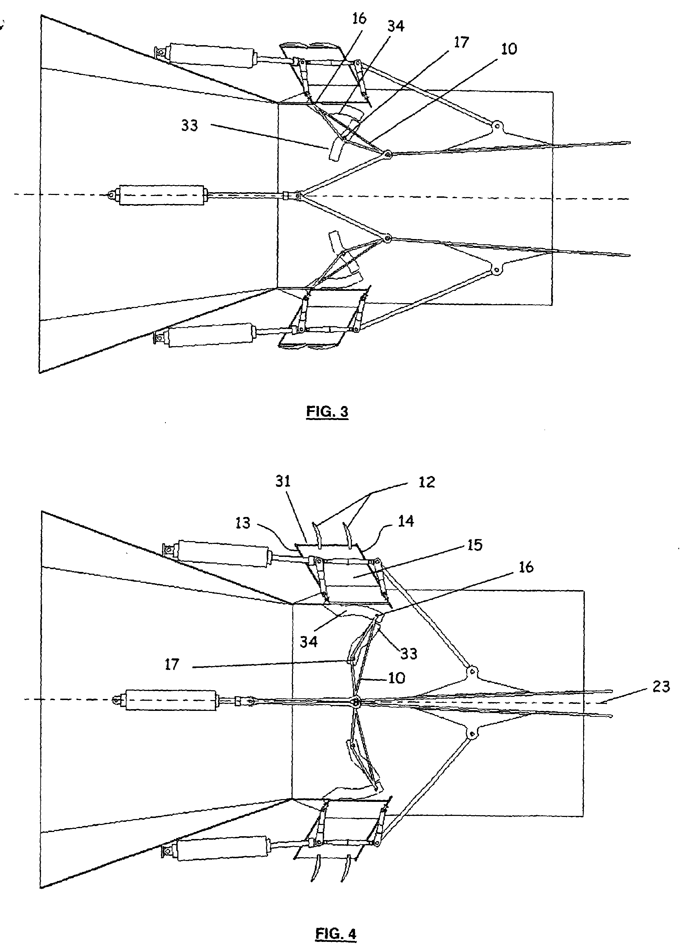

When the convergent flap (10) reaches the position of minimum forward thrust throat area (FIG. 3), the front sliding guides (16) slide along the straight section of the first cam tracks (34), while the rear sliding guides (17) slide along the straight section of the second cam tracks (33). When the rear sliding guides (17) reach the ends of the second cam tracks (33), the front sliding guides (16) slide along respective sections of the first cam tracks (34) that have a curved shape corresponding to a segment of a circle having its centre at the position of the temporarily fixed rear sliding guides (17). The reverse thrust operation mode position is obtained when the front sliding guides (16) reach the ends of the first cam tracks (34) (FIG. 4).

The actuation system comprises two convergent flap actuators (19) disposed outside the gas path duct, on the sidewalls (7). Each one of said convergent flap actuators (19) has a pushrod (20) operably connected to both convergent flaps (10) by respective connecting rods (21). Each rod (21) can be coupled to the rear edge (36) of the corresponding convergent flap (10) by means of a connecting pin, shaft or a similar mechanism, whereby the convergent flap (10) will be pivotally arranged with regard to the rod (21); said pin or shaft can pass through a suitable slot (not illustrated in the drawings) in the sidewall (7).

Both the upper and lower convergent flaps (10) are operably connected to each one of the two convergent flap actuators (19) and are thus actuated simultaneously and symmetrically. The convergent nozzle throat area is defined between the rear edges of the convergent flaps (10) and the sidewalls (7). FIG. 3 shows the flap assemblies (8, 9) in a position which provides the minimum throat area suitable for forward thrust operation. FIG. 2 shows the flap assemblies (8, 9) in a position which provides the maximum throat area suitable for forward trust operation; this position is achieved with the convergent flap actuators (19) fully extended. When the convergent flap actuators (19) are fully retracted, the rearward edges (22) of the convergent flaps (10) meet at the engine centreline (23) and completely block the axial flow of gases through the nozzle (1). The flow is redirected to the reverse gas flow duct (15), delimited by a front wall (13), a rear wall (14) and a set of louvers (12). These louvers (12) are closed during forward thrust operation, so as to present a smooth external nozzle surface with minimum drag, and are opened during reverse thrust operation of the nozzle, as is illustrated on FIG. 4.

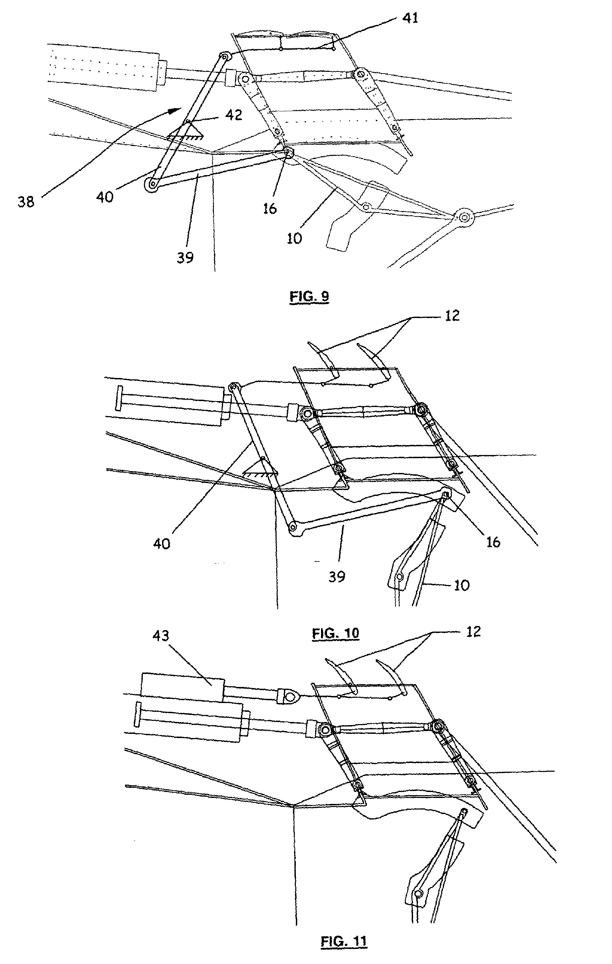

Each of the louvers (12) is pivotally secured about its own axis to the sidewalls (7). During reverse thrust operation, the louvers (12) are preferably actuated by a system of rods (38) connected to the front sliding guide (16) of the convergent flap (10). The system of rods (38) comprises a moveable first rod (39) pivotally connected at a first end to the front sliding guide (16) and at a second end to a first end of a second rod (40), which is pivotally fixed, at an intermediate position (42), to the sidewall (7). The second end of the second rod (40) is pivotallly joined to a third rod (41), which in turn is connected to each individual louver (12). FIG.9 shows a partial view of the nozzle (1) and the louvers (12) in a forward thrust operation mode position, and FIG. 10, shows the same partial view of the nozzle (1) in the reverse thrust operation mode position, where the louvers (12) are opened by the movement of the convergent flap (10), transmitted through the mentioned system of rods (38).

FIG. 11 shows an alternative system where the louvers (12) are actuated by an independent louver actuator mechanisms (43) which will open and close the louvers (12) to any desired extent to vary the direction of flow of exhaust gases during reverse thrust operation.

Divergent flaps (11) also extend from one sidewall (7) to the other and have a gas path defining inner surface (24). Each divergent flap (11) is pivotally connected at its front edge (36) to the rear edge (22) of the convergent flap (10) of its respective flap assembly (8, 9). The divergence angle (35) of the divergent flap (11) is controlled by a divergent actuator (26) preferably joined to the divergent flap (11) by a system of rods (25, 37).

One rod (25) is pivotally connected to the divergent flap (11) at one end and pivotally connected to a system of further rods (37) at the other end.

The system of further rods (37) comprises two rods (28, 29) pivotally connected at one end, to the front (13) and rear (14) walls that define the reverse flow duct (15), and pivotally connected to a third rod (30) at the other end. Said third rod (30) is also pivotally connected to the divergent actuator's (26) pushrod (27) and to the rod (25) that is connected to the divergent flap. The system of rods (37) is located within two walls (31) (only one of which is shown in FIG. 1) that divide the reverse flow duct in two to avoid high temperatures of the system of rods (37) during reverse mode operation.

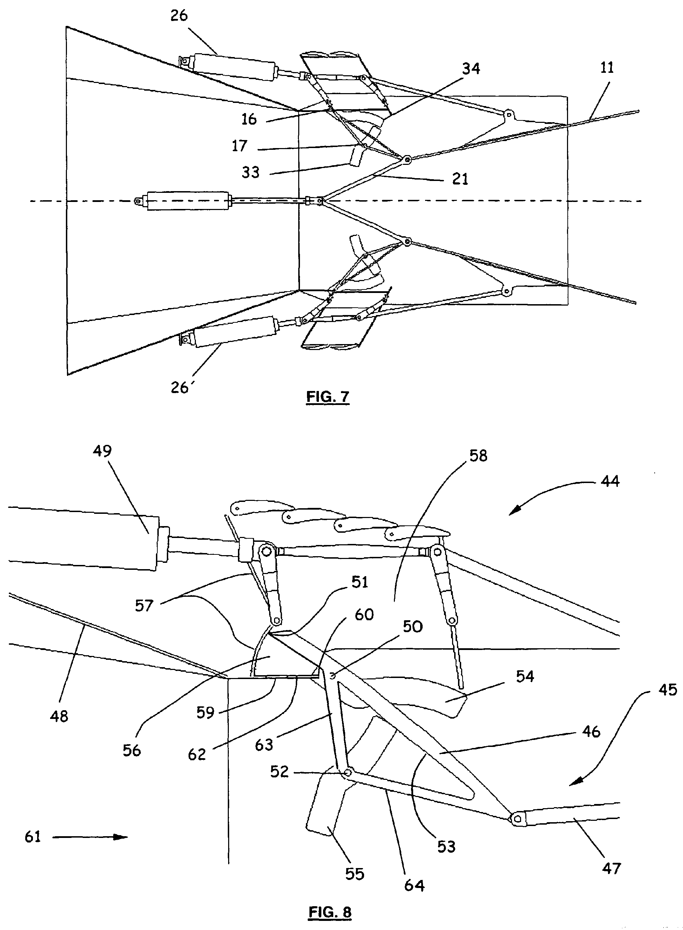

The divergent actuators (26) are pivotally mounted to respective brackets (32). Upper (26) and lower (26') divergent actuators are connected to upper and lower divergent flaps (11) respectively, and are actuated independently to achieve variations in nozzle exit area as well as thrust vectoring. FIG. 6 shows the flap assemblies (8, 9) in a position that provides thrust vectoring, achieved with the upper divergent actuator (26) fully extended and the lower divergent actuator (26') fully retracted. FIG. 7 shows the nozzle (1) in a maximum exit area position achieved with both upper (26) and lower (26') divergent actuators fully retracted.

An alternative embodiment of the present invention is shown in FIG. 8. The exhaust nozzle assembly of this embodiment is designated by the reference numeral 44. Like the first embodiment, this embodiment includes upper and lower flap assemblies (45) (only the upper one is shown in FIG.8; the lower one is a mirror image of the upper one), each comprising a convergent flap (46) and a divergent flap (47). The flaps are connected to each other in a way similar to the way in which their counterparts in the fist embodiment are connected to each other, and for that reason no further details need to be provided. Other elements of the nozzle (44) which are analogous to elements of the first embodiment include the transition gas path duct (48), the divergent actuator (49) and the convergent actuator and its rods (not shown in the drawing).

The mechanism in accordance with this embodiment comprises an exhaust nozzle assembly (44) with a balanced beam system on the front side of the convergent flap (46). The convergent flap (46) is mounted on two front sliding guides (50), located at a distance from the convergent flap front edge (51), and two rear sliding guides (52), located at an intermediate axial position and at a distance from the convergent flap inner surface (53). Each one of the rear sliding guides (52) is mounted on two beams (63, 64), one of said beams (63) extending between the rear sliding guide (52) to the front sliding guide (51). (Instead of the beams, any other suitable structure could be used, for example, plates, etc.) The front and rear sliding guides (50, 52) are arranged to slide along the cam tracks (54, 55) as in the first embodiment described above. The main difference between the first and the second embodiments resides in the fact that the convergent flap (46), in the second embodiment, extends forwards beyond the position of the front sliding guides (50). This extension creates a cavity (56) between the front wall (57) of the reverse flow duct (58) and the inner surface (53) of the convergent flap (46); at said cavity, the front wall (57) of the reverse flow duct (58) will have a curved shape, corresponding to a segment of a circle whose centre is at the position of the front sliding guide (50). The cavity is partly delimited by a plate (60) which extends between the side walls (7) whose function is to reduce turbulence.

The plate (60) is provided with holes (59) for minimising the difference in pressure between the cavity (56) and the gas path duct (61). During forward thrust operation, the convergent flap (46) pivots around the front sliding guide (50), and the gas pressure acting on the front of the convergent flap (46) partially balances the gas pressure on the rest of the convergent flap (46), reducing the loads on the convergent actuators (19) (not shown).

## Claims

1. A gas turbine engine exhaust nozzle mechanism, comprising:
- a convergent nozzle section including two side walls (7) and two convergent flaps (10, 46), said convergent flaps extending between said side walls (7) in a direction substantially perpendicular to said side walls (7), said side walls and said convergent flaps defining a gas path duct;
- an upper and a lower reverse flow duct (15, 58), each of said upper and lower reverse flow ducts having, at an exit end thereof, a set of louvers (12) that are arranged to be open during a reverse thrust operation mode and closed during a forward thrust operation mode;
- at least one actuator mechanism comprising a convergent flap actuator (19), the convergent flaps (10, 46) being arranged to be displaceable between a forward thrust operation mode position (FIGS. 1-3, 5-9) and a reverse thrust operation mode position (FIG. 4, 10-11) by said at least one convergent flap actuator (19);
the convergent flaps (10, 46) being arranged to block the reverse flow ducts (15, 58) when said convergent flaps (10, 46) are in the forward thrust operation mode position;
**CHARACTERISED IN THAT**
each of said convergent flaps (10, 46) is provided with a pair of front sliding guides (16, 50), each front sliding guide being housed in a respective first cam track (34, 54) in a respective side wall (7);
each of said convergent flaps (10, 46) is provided with a pair of rear sliding guides (17, 52), each rear sliding guide being housed in a respective second cam track (33, 55) in a respective side wall (7);
whereby said convergent flaps (10, 46), said front sliding guides (16, 50), said rear sliding guides (17, 52), said first cam tracks (34, 54) and said second cam tracks (33, 55) are arranged so that, upon actuation of the convergent flap actuator (19), the front sliding guides (16, 50) are displaced along the first cam tracks (34, 54) and the rear sliding guides (17, 52) are displaced along the second cam tracks (33, 55), whereby the convergent flaps (10, 46) are displaceable between said forward thrust operation mode position and said reverse thrust operation mode position.

2. Mechanism according to claim 1, wherein each convergent flap has an inner surface (18, 53) arranged to be a contact surface for gas flowing through the nozzle mechanism, whereby the rear sliding guides (17, 52) are arranged at a distance from said inner surface.

3. Mechanism according to any of the preceding claims, wherein the front sliding guides (16) are arranged at a front edge of each convergent flap (10).

4. Mechanism according to any of claims 1 and 2, wherein the front sliding guides (50) are arranged at a distance from a front edge of each convergent flap (46).

5. Mechanism according to any of the preceding claims, wherein the first cam tracks (34, 54) have a straight portion and a curved portion, and wherein the second cam tracks (33, 55) have a straight portion and a curved portion, whereby the rear sliding guides (17, 52) are displaceable along the curved portion of the second cam tracks (33, 55) when the front sliding guides (16, 50) are at the straight portion of the first cam tracks (34, 54), and whereby the front sliding guides (16, 50) are displaceable along the curved portion of the first cam tracks (34, 54) when the rear sliding guides (17, 52) are at the straight portion of the second cam tracks (33, 55).

6. Mechanism according to any of the preceding claims, whereby the front sliding guide (16, 50) corresponds to an axis around which the convergent flap (10, 46) pivots when the rear sliding guide (17, 52) is displaced along a curved portion of the second cam track (33, 55), whereas the second sliding guide (17, 52) corresponds to an axis around which the convergent flap (10, 46) pivots when the front sliding guide (16, 50) moves along a curved portion of the first cam track (34, 54).

7. Mechanism according to any of the preceding claims, wherein said at least one actuator mechanism comprises two actuator mechanisms, each one comprising one convergent flap actuator (19) connected two both convergent flaps (10) by means of a force transmission mechanism comprising at least one pushrod (20).

8. Mechanism according to claim 7, wherein said pushrod (20) is connected to each convergent flap (10) by means of a corresponding connecting rod (21).

9. Mechanism according to claim 8, wherein each connecting rod (21) is connected to one of said convergent flaps (10) at a rear end of said convergent flap (10).

10. Mechanism according to any of the preceding claims, wherein a divergent flap (11, 47) is pivotally connected to a rear end of each convergent flap (10, 46).

11. Mechanism according to claim 10, wherein each divergent flap (11, 47) is arranged to be pivotally displaced by means of a mechanism including a divergent actuator (26, 49) and a plurality of rods (25, 28, 29, 30) arranged so that movement of a pushrod (27) of the actuator is translated into a pivotal movement of the divergent flap (11, 47) around an axis corresponding to a point of connection between the divergent flap (11, 47) and the corresponding convergent flap (10, 46).

12. Mechanism according to claim 11, wherein one rod (25) of said plurality of rods (25, 28, 29, 30) is pivotally connected to the divergent flap (11, 47) at one end and pivotally connected to a system of further rods (37) at the other end, whereby said system of further rods (37) includes one rod (28) pivotally connected at a first end to a front wall (13) of the reverse flow duct (15, 58) and one rod (29) pivotally connected at a first end to a rear wall (14) of the reverse flow duct (15, 58), each of said rods (28, 29) having a second end being pivotally connected to a third rod (30), said third rod (30) being pivotally connected to the pushrod (27) of the divergent actuator at one end and to the rod (25) that is connected to the divergent flap (11, 47) at the other end.

13. Mechanism according to any of the preceding claims, wherein the louvers (12) are arranged to be operated by means of an independent louver actuator mechanism (43).

14. Mechanism according to any of claims 1-12, wherein the louvers (12) are actuated by means of a system of rods (38) operatively connected to the convergent flap (10, 46) and to the louvers (12) and arranged so that when the convergent flap (10, 46) is displaced from the forward thrust operation mode position (FIG. 9) to the reverse thrust operation mode position (FIG. 10), the louvers (12) are displaced from a closed position to an open position by means of said system of rods (38).

15. Mechanism according to claim 14, wherein the system of rods (38) comprises a first rod (39) a first end of which is connected to the convergent flap (10, 46), a second rod (40) a first end of which is pivotally connected to a second end of the first rod (39), a second end of said second rod (40) being pivotally connected to a third rod (41) connected to the louvers (12), said second rod (40) being pivotally connected to a side wall (7) at a position between said first end and said second end of said second rod (40).

16. Mechanism according to any of the preceding claims, further including a transition gas path duct (2, 48) having: an upstream end (3) having a circular cross section, an intermediate transition section (4) and a downstream end (5) having a rectangular cross section.

17. Mechanism according to any of the preceding claims, wherein each reverse flow duct (15, 58) is separated into two flow duct portions by means of two internal walls (31), said internal walls establishing a space for the passage of a mechanism including a divergent actuator (26, 49) and a plurality of rods (25, 28, 29, 30) for transmitting movement to the divergent flaps (11).

18. Mechanism according to claim 4, wherein a cavity (56) is established in said forward thrust operation mode position, said cavity being delimited by a portion the inner surface (53) of the convergent flap (46), a portion of the front wall (57) of the reverse flow duct (58) and a plate (60) extending between the inner walls, said plate including holes (59).

## Patentansprüche

1. Schubdüsellmechanismus für Gasturbirientriebwerk, umfassend;
einen konvergenten Düsenabschnitt, der zwei Seitenwände (7) und zwei konvergente Klappen (10, 46) umfasst, wobei die konvergenten Klappen sich zwischen den Seitenwänden (7) in einer Richtung erstrecken, die im Wesentlichen senkrecht zu den Seitenwänden (7) ist, und die Seitenwände und die konvergenten Klappen einen Gaswegstreckenkanal definieren;
einen oberen und einen unteren Gegenströmungskanal (15, 58), wobei jeder des oberen und des unteren Gegenströmungskanals an einem Ausgangsende davon einen Satz von Luftschlitzen (12) aufweist, die so ausgelegt sind, dass sie während einer Umkehrschubbetriebsart offen sind und während einer Vorwärtsschubbetriebsart geschlossen sind;
wenigstens einen Betätigungsmechanismus, der ein konvergentes Klappenbetätigungselement (19) umfasst, wobei die konvergenten Klappen (10, 46) so ausgelegt sind, dass sie zwischen einer Vorwärtsschubbetriebsposition (FIG. 1-3, 5-9) und einer Umkehrschubbetriebsposition (FIG. 5, 10-11) durch das wenigstens eine konvergente Klappenbetätigungselement (19) verstellbar sind;
die konvergenten Klappen (10, 46) so ausgelegt sind, dass sie die Gegenströmungskanäle (15, 58) blockieren, wenn die konvergenten Klappen (10, 46) in der Vorwärtsschubbetriebsposition sind;
**dadurch gekennzeichnet, dass**
jede der konvergenten Klappen (10, 46) mit einem Paar von vorderen Gleitführungen (16, 50) versehen ist, wobei jede vordere Gleitführung in einer jeweiligen ersten Nockenbahn (34, 54) in einer jeweiligen Seitenwand (7) untergebracht ist;
jede der konvergenten Klappen (10, 46) mit einem Paar von hinteren Gleitführungen (17, 52) versehen ist, wobei jede hintere Gleitführung in einer jeweiligen zweiten Nockenbahn (33, 55) in einer jeweiligen seitenwand (7) untergebracht ist;
wobei die konvergenten Klappen (10, 46), die vorderen Gleitführungen (16, 50), die hinteren Gleitführungen (17, 52), die ersten Nockenbahnen (34, 54) und die zweiten Nockenbahnen (33, 55) so ausgelegt sind, dass bei Betätigung des konvergenten Klappenbetätigungselements (19) die vorderen Gleitführungen (16, 50) entlang der ersten Nockenbahnen (34, 54) verschoben werden und die hinteren Gleitführungen (17, 52) entlang der zweiten Nockenbahnen (33, 55) verschoben werden, wobei die konvergenten Klappen (10, 46) zwischen der Vorwärtsschubbetriebsposition und der Umkehrschubbetriebsposition verstellbar sind.

2. Mechanismus nach Anspruch 1, wobei jede konvergente Klappe eine Innenfläche (18, 53) aufweist, die so ausgelegt ist, dass sie eine Kontaktfläche für Gas ist, das durch den Düsenmechanismus strömt, wobei die hinteren Gleitführungen (17, 52) in einer Entfernung von der Innenfläche angeordnet sind.

3. Mechanismus nach einem der vorhergehenden Ansprüche, wobei die vorderen Gleitführungen (16) an einer Vorderkante jeder konvergenten Klappe (10) angeordnet sind.

4. Mechanismus nach einem der Ansprüche 1 und 2, wobei die vorderen Gleitführungen (50) in einer Entfernung von einer Vorderkante jeder konvergenten Klappe (46) angeordnet sind.

5. Mechanismus nach einem der vorhergehenden Ansprüche, wobei die ersten Nockenbahnen (34, 54) einen geraden Abschnitt und einen gekrümmtem Abschnitt aufweisen und wobei die zweiten Nockenbahnen (33, 55) einen geraden Abschnitt und einen gekrümmten Abschnitt aufweisen, wobei die hinteren Gleitführungen (17, 52) entlang des gekrümmten Abschnitts der zweiten Nockenbahnen (33, 55) verschiebbar sind, wenn die vorderen Gleitführungen (16, 50) am geraden Abschnitt der ersten Nockenbahnen (34, 54) sind, und wobei die vorderen Gleitführungen (16, 50) entlang des gekrümmten Abschnitts der ersten Nockenbahnen (34, 54) verschiebbar sind, wenn die hinteren Gleitführungen (17, 52) am geraden Abschnitt der zweiten Nockenbahnen (33, 55) sind.

6. Mechanismus nach einem der vorhergehenden Ansprüche, wobei die vordere Gleitführung (16, 50) einer Achse entspricht, um welche die konvergente Klappe (10,46) sich dreht, wenn die hintere Gleitführung (17, 52) entlang eines gekrümmten Abschnitts der zweiten Nockenbahn (33, 55) verschoben wird, wohingegen die zweite Gleitführung (17, 52) einer Achse entspricht, um welche die konvergente Klappe (10, 46) sich dreht, wenn die vordere Gleitführung (16, 50) sich entlang eines gekrümmten Abschnitts der ersten Nockenbahn (34, 54) bewegt.

7. Mechanismus nach einem der vorhergehenden Ansprüche, wobei der wenigstens eine Betätigungsmechanismus zwei Betätigungsmechanismen umfasst, welche jeweils ein konvergentes Klappenbetätigungselement (19) umfassen, das mit beiden konvergenten Klappen (10) mittels eines Kraftübertragungsmechanismus, der wenigstens eine schubstange (20) umfasst, verbunden ist.

8. Mechanismus nach Anspruch 7, wobei die Schubstange (20) mit jeder konvergenten Klappe (10) mittels einer entsprechenden Verbindungsstange (21) verbunden ist.

9. Mechanismus nach Anspruch 8, wobei die Verbindungsstange (21) mit einer der konvergenten Klappen (10) an einem hinteren Ende der konvergenten Klappe (10) verbunden ist.

10. Mechanismus nach einem der vorhergehenden Ansprüche, wobei eine divergente Klappe (11, 47) mit einem hinteren Ende jeder konvergenten Klappe (10, 46) drehbar verbunden ist.

11. Mechanismus nach Anspruch 10, wobei jede divergente Klappe (11, 47) so ausgelegt ist, dass sie mittels eines Mechanismus drehbar verstellt wird, der ein divergentes Betätigungselement (26, 49) und eine Mehrzahl von Stangen (25, 28, 29, 30) umfasst und so ausgelegt ist, dass eine Bewegung der Schubstange (27) des Betätigungselements in eine Drehbewegung der divergenten Klappe (11, 47) um eine Achse, welche einem Verbindungspunkt zwischen der divergenten Klappe (11, 47) und der entsprechenden konvergenten Klappe (10, 46) entspricht, übersetzt wird.

12. Mechanismus nach Anspruch 11, wobei eine Stange (25) der Mehrzahl von Stangen (25, 28, 29, 30) mit der divergenten Klappe (11, 47) an einem Ende drehbar verbunden ist und mit einem System von weiteren Stangen (37) am anderen Ende drehbar verbunden ist, wobei das System von weiteren Stangen (37) eine Stange (28), welche an einem ersten Ende mit einer Vorderwand (13) des Gegenströmungskanals (15, 58) drehbar verbunden ist, und eine Stange (29), welche an einem ersten Ende mit einer Rückwand (14) des Gegenströmungskanals (15, 58) drehbar verbunden ist, umfasst, jede der Stangen (28, 29) ein zweites Ende aufweist, das mit einer dritten Stange (30) drehbar verbunden ist, und die dritte Stange (30) mit der Schubstange (27) des divergenten Betätigungselements an einem Ende und mit der Stange (25), die mit der divergenten Klappe (11, 47) verbunden ist, am anderen Ende drehbar verbunden ist.

13. Mechanismus nach einem der vorhergehenden Ansprüche, wobei die Luftschlitze (12) so ausgelegt sind, dass sie mittels eines unabhängigen Luftschlitzbetätigungsmechanismus (43) betrieben werden.

14. Mechanismus nach einem der Ansprüche 1 bis 12, wobei die Luftschlitze (12) mittels eines Systems von Stangen (38) betätigt werden, das mit der konvergenten Klappe (10, 46) und mit den Luftschlitzen (12) operativ verbunden und so ausgelegt ist, dass, wenn die konvergente Klappe (10, 46) von der Vorwärtsschubbetriebsposition (FIG. 9) in die Umkehrschubbetriebsposition (FIG. 10) verstellt wird, die Luftschlitze (12) mittels des Systems von Stangen (38) von einer geschlosserien Position in eine offene Position verstellt werden.

15. Mechanismus nach Anspruch 14, wobei das System von Stangen (38) eine erste Stange (39), von welcher ein erstes Ende mit der konvergenten Klappe (10, 46) verbunden ist, und eine zweite Stange (40), von welcher ein erstes Ende drehbar mit einem zweiten Ende der ersten Stange (39) verbunden ist, umfasst, wobei ein zweites Ende der zweiten Stange (40) drehbar mit einer dritten Stange (41) verbunden ist, die mit den Luftschlitzen (12) verbunden ist, und die zweite Stange (40) an einer Position zwischen dem ersten Ende und dem zweiten Ende der zweiten Stange (40) drehbar mit einer Seitenwand (7) verbunden ist.

16. Mechanismus nach einem der vorhergehenden Ansprüche, welcher ferner einen Übergangsgaswegstreckenkanal (2, 48) umfasst, der aufweist, ein stromaufwärts liegendes Ende (3) mit einem kreisförmigen Querschnitt, einen dazwischen liegenden Übergangsabschnitt (4) und ein stromabwärts liegendes Ende (5) mit einem rechteckigen Querschnitt.

17. Mechanismus nach einem der vorhergehenden Ansprüche, wobei jeder Gegenströmungskanal (15, 58) mittels zweier innerer Wände (31) in zwei Strömungskanalabschnitte geteilt ist und die inneren Wände einen Raum für den Durchgang eines Mechanismus bilden, der ein divergentes Betätigungselement (26, 49) und eine Mehrzahl von Stangen (25, 28, 29, 30) zum Übertragen von Bewegung auf die divergenten Klappen (11) umfasst.

18. Mechanismus nach Anspruch 4, wobei ein Hohlraum (56) in der Vorwärtsschubbetriebsposition gebildet wird und der Hohlraum durch einen Abschnitt der Innenfläche (53) der konvergenten Klappe (46), einen Abschnitt der Vorderwand (57) des Gegensträmungskanals (58) und eine Platte (60), die sich zwischen den Innenwänden erstreckt, wobei die Platte Löcher (59) aufweist, begrenzt wird.

## Revendications

1. Mécanisme de tuyère d'échappement de turbine à gaz, comprenant :
une section de tuyère convergente comprenant deux parois latérales (7) et deux volets convergents (10, 46), lesdits volets convergents s'étendant entre lesdites parois latérales (7) dans une direction sensiblement perpendiculaire auxdites parois latérales (7), lesdites parois latérales et lesdits volets convergents définissant un conduit d'écoulement de gaz ;
une conduit d'écoulement inversé supérieur et inférieur (15, 58), chacun desdits conduits d'air d'écoulement inversé supérieure et inférieure ayant à son extrémité de sortie un ensemble de lames (12) qui sont disposées de manière à être ouvertes au cours d'un mode de fonctionnement de poussée inversée et de manière à être fermées au cours d'un mode de fonctionnement de poussée normale ;
au moins un mécanisme actionneur comprenant un actionneur de volet convergent (19), les volets convergents (10, 46) étant disposés de manière à pouvoir être déplacés entre une position en mode de fonctionnement de poussée normale (figures 1-3, 5-9) et une position en mode de fonctionnement de poussée inversée (figures 4, 10-11) par ledit au moins un actionneur de volet convergent (19) ;
les volets convergents (10, 46) étant disposés de manière à bloquer les conduits d'écoulement inversé (15, 58) lorsque lesdits volets convergents (10, 46) sont dans la position en mode de fonctionnement de poussée normale ;
**caractérisé en ce que**
chacun desdits volets convergents (10, 46) est muni d'une paire de guides coulissants avants (16, 50), chaque guide coulissant avant étant logé dans une première rampe de guidage respective (34, 54) dans une paroi latérale respective (7);
chacun desdits volets convergents (10, 46) est muni d'une paire de guides coulissants arrières (17, 52), chacune des guides coulissants arrières étant logée dans une seconde rampe de guidage respective (33, 55) dans une paroi latérale respective (7) ;
moyennant quoi lesdits volets convergents (10, 46), lesdites guides coulissants avants (16, 50), lesdites guides coulissants arrières (17, 52), lesdites premières rampes de guidage (34, 54) et lesdites secondes rampes de guidage (33, 55) sont disposés de manière à ce que, lors de l'actionnement de l'actionneur de volet convergent (19), les guides coulissants avant (16, 50) sont déplacés le long des premières rampes de guidage (34, 54) et les guides coulissants arrières (17, 52) sont déplacés le long des secondes rampes de guidage (33, 55), moyennant quoi les volets convergents (10, 46) peuvent être déplacés entre ladite position en mode de fonctionnement de poussée normale et ladite position en mode de fonctionnement de poussée inversée.

2. Mécanisme selon la revendication 1, dans lequel chaque volet convergent présente une surface intérieure (18, 53) disposée de manière à être une surface de contact pour l'écoulement de gaz à travers le mécanisme de tuyère, moyennant quoi les guides coulissants arrières (17, 52) sont disposés à distance de ladite surface intérieure.

3. Mécanisme selon l'une quelconque des revendications précédentes, dans lequel les guides coulissants avants (16) sont disposés au niveau d'une arrête avant de chaque volet convergent (10).

4. Mécanisme selon l'une quelconque des revendications 1 et 2, dans lequel les guides coulissants avants (50) sont disposés à distance d'une arrête avant de chaque volet convergent (46).

5. Mécanisme selon l'une quelconque des revendications précédentes, dans lequel les premières rampes de guidage (34, 54) présentent une partie droite et une partie courbée et dans lequel les secondes rampes de guidage (33, 55) présentent une partie droite et une partie courbée, moyennant quoi les guides coulissants arrières (17, 52) peuvent être déplacés le long de la partie courbée des secondes rampes de guidage (33, 55) lorsque les guides coulissants avants (16, 50) se trouvent sur la partie droite des premières rampes de guidage (34, 54) et moyennant quoi les guides coulissants avants (16, 50) peuvent être déplacés le long de la partie courbée des premières rampes de guidage (34, 54) lorsque les guides coulissants arrières (17, 52) se trouvent sur la partie droite des secondes rampes de guidage (33, 55).

6. Mécanisme selon l'une quelconque des revendications précédentes, moyennant quoi la guide coulissant avant (16, 50) correspond à un axe autour duquel le volet convergent (10, 46) pivote lorsque la guide coulissant arrière (17, 52) est déplacé le long d'une partie courbée de la seconde rampe de guidage (33, 55), tandis que le second guide coulissant (17, 52) correspond à un axe autour duquel le volet convergent (10, 46) pivote lorsque le guide coulissant avant (16, 50) se déplace le long d'une partie courbée de la première rampe de guidage (34, 54).

7. Mécanisme selon l'une quelconque des revendications précédentes, dans lequel ledit au moins un mécanisme actionneur comprend deux mécanismes d'actionneur, chacun comprenant un actionneur de volet convergent (19) relié aux deux volets convergents (10) au moyen d'un mécanisme de transmission de force comprenant au moins une tige poussoir (20).

8. Mécanisme selon la revendication 7, dans lequel ladite tige poussoir (20) est reliée à chaque volet convergent (10) au moyen d'une bielle de couplage correspondante (21).

9. Mécanisme selon la revendication 8, dans lequel chaque bielle de couplage (21) est reliée à l'un desdits volets convergents (10) au niveau d'une extrémité arrière dudit volet convergent (10).

10. Mécanisme selon l'une quelconque des revendications précédentes, dans lequel un volet hypersustentateur divergent (11, 47) est relié de manière à pouvoir pivoter à une extrémité arrière de chaque volet convergent (10, 46).

11. Mécanisme selon la revendication 10, dans lequel chaque volet hypersustentateur divergent (11, 47) est disposé de manière à être déplacée de manière pivotante au moyen d'un mécanisme comprenant un actionneur divergent (26, 49) et une pluralité de bielles (25, 28, 29, 30) disposées de manière à ce que le mouvement d'une tige poussoir (27) de l'actionneur soit translaté en un mouvement pivotant du volet hypersustentateur divergent (11, 47) autour d'un axe correspondant à un point de connexion entre le volet hypersustentateur divergent (11, 47) et le volet convergent (10, 46) correspondant.

12. Mécanisme selon la revendication 11, dans lequel une bielle (25) de ladite pluralité de bielles (25, 28, 29, 30) est reliée de manière à pouvoir pivoter au volet hypersustentateur divergent (11, 47) au niveau d'une extrémité et reliée de manière à pouvoir pivoter à un système de bielles supplémentaires (37) au niveau de l'autre extrémité, moyennant quoi ledit système de bielles supplémentaires (37) comprend une bielle (28) reliée de manière à pouvoir pivoter au niveau d'une première extrémité à une paroi avant (13) du conduit d'écoulement inversé (15, 58) et une bielle (29) reliée de manière à pouvoir pivoter au niveau d'une première extrémité à une paroi arrière (14) du conduit d'écoulement inversé (15, 58), chacune desdites bielles (28, 29) présentant une seconde extrémité étant reliée de manière à pouvoir pivoter à une troisième bielle (30), ladite troisième bielle (30) étant reliée de manière à pouvoir pivoter à la tige poussoir (27) de l'actionneur divergent au niveau d'une extrémité et à la bielle (25) qui est reliée au volet hypersustentateur divergent (11, 47) au niveau de l'autre extrémité.

13. Mécanisme selon l'une quelconque des revendications précédentes, dans lequel les lames (12) sont disposées de manière à pouvoir être actionnées au moyen d'un mécanisme actionneur de persienne indépendant (43).

14. Mécanisme selon l'une quelconque des revendications 1-12, dans lequel les lames (12) sont actionnées au moyen d'un système de bielles (38) relié de manière à pouvoir être actionné au volet convergent (10, 46) et aux lames (12) et disposées de manière à ce que lorsque le volet convergent (10, 46) est déplacé de la position en mode de fonctionnement de poussée normale (figure 9) à la position en mode de fonctionnement de poussée inversée (figure 10), les lames (12) sont déplacées d'une position fermée à une position ouverte au moyen dudit système de bielles (38).

15. Mécanisme selon la revendication 14, dans lequel le système de bielles (38) comprend une première bielle (39) dont une première extrémité est reliée au volet convergent (10, 46), une deuxième bielle (40) dont une première extrémité est reliée de manière à pouvoir pivoter à une seconde extrémité de la première bielle (39), une seconde extrémité de ladite deuxième bielle (40) étant reliée de manière à pouvoir pivoter à une troisième bielle (41) reliée aux lames (12), ladite deuxième bielle (40) étant reliée de manière à pouvoir pivoter à une paroi latérale (7) au niveau d'une position entre ladite première extrémité et ladite seconde extrémité de ladite deuxième bielle (40).

16. Mécanisme selon l'une quelconque des revendications précédentes, comprenant en outre un conduit d'écoulement de gaz de transition (2, 48) présentant une extrémité amont (3) ayant une coupe circulaire, une section de transition intermédiaire (4) et une extrémité aval (5) ayant une coupe rectangulaire.

17. Mécanisme selon l'une quelconque des revendications précédentes, dans lequel chaque conduit d'écoulement inversé (15, 58) est séparé en deux parties de conduit d'écoulement au moyen de deux parois intérieures (31), lesdites parois intérieures définissant un espace pour le passage d'un mécanisme comprenant un actionneur divergent (26, 49) et une pluralité de bielles (25, 28, 29, 30) pour transmettre le mouvement aux volets divergents (11).

18. Mécanisme selon la revendication 4, dans lequel une cavité (56) est définie dans ladite position en mode de fonctionnement de poussée normale, ladite cavité étant délimitée par une partie de la surface intérieure (53) du volet convergent (46), une partie de la paroi avant (57) du conduit d'écoulement inversé (58) et une plaque (60) s'étendant entre les parois intérieures, ladite plaque comprenant des trous (59).
